(19) Europäisches Patentamt
European Patent Office
Office européen des brevets

(11) **EP 3 376 207 B1**

(12) **EUROPEAN PATENT SPECIFICATION**

(45) Date of publication and mention
of the grant of the patent:
**04.10.2023 Bulletin 2023/40**

(21) Application number: **17188320.0**

(22) Date of filing: **29.08.2017**

(51) International Patent Classification (IPC):
*G01N 21/17* (2006.01)      *G01B 11/06* (2006.01)
*G01N 21/66* (2006.01)      *G01N 21/84* (2006.01)
*G01N 21/95* (2006.01)

(52) Cooperative Patent Classification (CPC):
**G01N 21/9505; G01B 11/06; G01B 11/0666;
G01N 21/1717; G01N 21/66; G01N 21/8422**

(54) **OPTICAL TEST APPARATUS**

OPTISCHE TESTVORRICHTUNG

APPAREIL DE TEST OPTIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **17.03.2017 JP 2017053434**

(43) Date of publication of application:
**19.09.2018 Bulletin 2018/38**

(73) Proprietor: **KABUSHIKI KAISHA TOSHIBA**
**Minato-ku**
**Tokyo**
**105-8001 (JP)**

(72) Inventors:
• **Ohno, Hiroshi**
**Tokyo, 105-8001 (JP)**
• **Goryu, Akihiro**
**Tokyo, 105-8001 (JP)**
• **Kato, Mitsuaki**
**Tokyo, 105-8001 (JP)**
• **Kano, Hiroya**
**Tokyo, 105-8001 (JP)**
• **Okano, Hideaki**
**Tokyo, 105-8001 (JP)**

(74) Representative: **Henkel & Partner mbB**
**Patentanwaltskanzlei, Rechtsanwaltskanzlei**
**Maximiliansplatz 21**
**80333 München (DE)**

(56) References cited:
**WO-A1-2004/055498      WO-A1-2015/184162
US-A1- 2003 032 377      US-A1- 2004 253 751**

• **Thomsen C ET AL: "Surface generation and
detection of phonons by picosecond light
pulses", Physical Review B, vol. 34, no. 6, 19
March 1986 (1986-03-19) , pages 4129-4138,
XP055796350, Retrieved from the Internet:
URL:https://journals.aps.org/prb/pdf/10.11
03/PhysRevB.34.4129>**

## Description

FIELD

The present disclosure relates to optical test apparatuses.

BACKGROUND

In the manufacturing process of a semiconductor, and in the maintenance management of manufactured products, facilities, piping and the like in various industries, a technique of non-contact testing a defect is becoming important. Non-contact detection apparatuses already exist that utilize convergence and reflection of light and use the light as a probe.

US 2004/253751 A1 discloses that a modulated reflectance measurement system includes two lasers for generating a probe beam and an intensity modulated pump beam. The probe beam is in the visible spectrum and the pump beam is in the ultraviolet spectrum. The pump and probe beams are joined into a collinear beam and focused by an objective lens onto a sample. Reflected energy returns through the objective and is redirected by a beam splitter to a detector. A lock-in amplifier converts the output of the detector to produce quadrature (Q) and in-phase (I) signals for analysis. A processor uses the Q and/or I signals to analyze the sample.

US 2003/032377 A1 discloses a measuring apparatus comprising a heating unit for applying heat to a first point within a workpiece or on a surface of a workpiece and propagating the heat to a second point within the workpiece or on the surface of the workpiece. The measuring apparatus further comprises a measuring unit for measuring a displacement of the surface of the workpiece at the second point to which the heat has been propagated, and an analyzing unit for analyzing a structure of the workpiece based on the displacement measured by the measuring unit in consideration of a distance between the first point and the second point.

Further prior art is "Thomsen C ET AL: 'Surface generation and detection of phonons by picosecond light pulses', Physical Review B, vol. 34, no. 6, 19 March 1986, pages 4129-4138, https://journals.aps.org/prb/pdf/10.1103/PhysRevB.34.4129".

BRIEF DESCRIPTION OF THE DRAWINGS

FIG. 1 is a pattern diagram showing a schematic configuration example of an optical test apparatus according to a first arrangement.
FIG. 2 is a pattern diagram showing one example of the stress distribution in the depth direction of a specimen when an elastic wave is excited, according to the first arrangement.
FIG. 3 is a pattern diagram showing one example of theoretical values of a time-series change in intensity of a reflected beam according to the first arrangement.
FIG. 4 is a pattern diagram showing one example of theoretical values of a time-series change in intensity of a reflected beam when the wavelength of a probe beam according to the first arrangement is replaced with a long wavelength as compared to a case illustrated in FIG. 3.
FIG. 5 is a pattern diagram showing a schematic configuration example of an optical test apparatus according to a second arrangement.
FIG. 6 is a pattern diagram showing one example of a cross-section of a specimen including the depth direction of the specimen and a light beam, according to the second arrangement.
FIG. 7 is a pattern diagram showing one example of a cross-section of a specimen including the depth direction of the specimen and a light beam, according to the second arrangement.
FIG. 8 is a pattern diagram showing one example of a time-series change in intensity of a transmitted beam according to the second arrangement.
FIG. 9 is a pattern diagram showing a schematic configuration example of an optical test apparatus according to a third arrangement.
FIG. 10 is a pattern diagram showing a schematic configuration example of an optical test apparatus according to the third arrangement.

DETAILED DESCRIPTION

According to the present invention, there is provided an optical test apparatus as set out in independent claims 1 and 2. Advantageous developments are defined in the dependent claims.

Hereinafter, each arrangement of the present disclosure will be described with reference to the drawings. The drawings are patterned or conceptual ones, and thus the relationship between the thickness and the width of each part, and a ratio of the size between different parts are not necessarily identical to those of real parts. Even if the same part is intended to be expressed in different figures, there may be a case where the size and/or ratio of the parts are different from one another depending on the figure. In the specification and each of the figures of the present application, the same signs are given to the same elements that have been described in an already-illustrated figure, and a detailed explanation thereof will be omitted.

(First Arrangement)

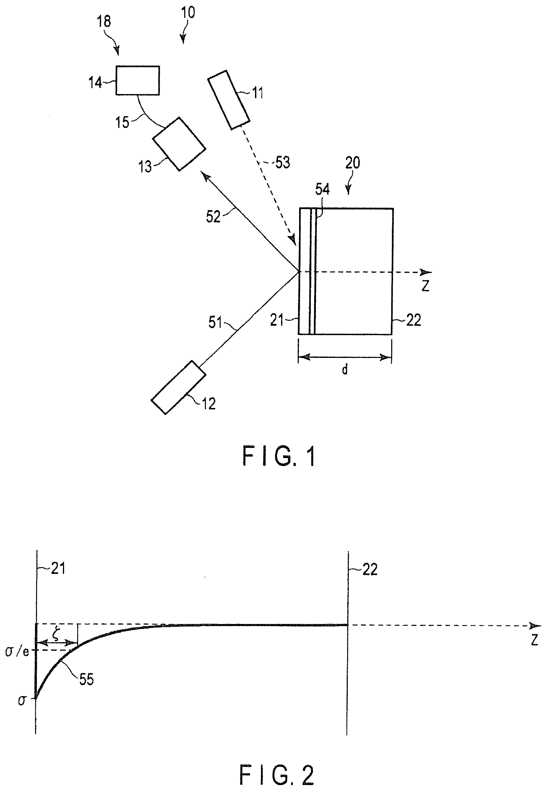

Hereinafter, each arrangement of the present disclosure will be explained in detail with reference to FIGs. 1 to 4.

The configuration of the optical test apparatus 10 according to the present arrangement is first explained. FIG. 1 is a pattern diagram of a schematic configuration example of the optical test apparatus 10 according to the present arrangement. FIG. 1 also illustrates a pattern diagram showing an overhead view of a cross-section of a test sample (specimen 20). For the test sample to be used as the specimen 20, any sample may be used. For example, metals (including alloys) such as stainless steel, Au, Al, Cu, W and Ti may be used, and non-metals such as carbon and amorphous carbon may be used. The specimen 20 may be a semi-conductor such as Si and SiC or a resin such as acrylic and polycarbonate. Furthermore, the specimen 20 may internally comprise a structure such as a multi-layered film. In this respect, however, in the present arrangement, an example where the specimen 20 is a single-layer film will be explained for simplicity. Hereinafter, the present arrangement will be explained while the depth direction of the specimen 20 is defined as a Z direction as shown in FIG. 1.

As shown in FIG. 1, the optical test apparatus 10 according to the present arrangement comprises a pump beam generating unit 11, a probe beam generating unit 12, a photodetector 13, and a processing circuit 14.

The pump beam generating unit 11 according to the present arrangement comprises, for example, a light source, and a light-focusing optical system. This light-focusing optical system is capable of applying a beam from the light source in a spotted form on an irradiated surface. The pump beam generating unit 11 applies a pump beam 53 toward a surface 21 of the specimen 20. Herein, the wavelength of the pump beam 53 is denoted as $\lambda 1$. The probe beam generating unit 12 according to the present arrangement comprises, for example, a light source and a light-focusing optical system. This light-focusing optical system is capable of applying a beam from the light source in a spotted form on an irradiated surface. The probe beam generating unit 12 applies a test beam (a probe beam 51) toward the surface 21 of the specimen 20. Herein, the wavelength of the probe beam 51 is denoted as $\lambda 2$. The photodetector 13 according to the present arrangement receives, for example, a reflected beam 52 (probe beam 51) reflected by the surface 21 of the specimen 20. The photodetector 13 according to the present arrangement comprises, for example, a photo-detection optical system, a streak camera capable of acquiring temporal and spatial changes about the intensity of a beam incident from the photo-detection optical system, and a CCD camera that acquires a streak image created by the streak camera. The processing circuit 14 acquires information on the specimen 20 based, for example, on a time-series change in intensity of the reflected beam 52 (probe beam 51) received by the photodetector 13. The information on the specimen 20 includes a thickness d in the z direction of the specimen 20, and the presence or absence of a defect of the specimen 20.

The optical test apparatus 10 according to the present arrangement further comprises a controlling circuit 18. The controlling circuit 18 is configured to control the operation of each part provided to the optical test apparatus 10. The controlling circuit 18 may be configured to include the processing circuit 14. Note that the controlling circuit 18 and part of functions provided to the controlling circuit 18 may be provided to the pump beam generating unit 11, the probe beam generating unit 12, and the photodetector 13, respectively. Although not illustrated in the drawings, the optical test apparatus 10 according to the present arrangement further comprises a power-supply unit and a recording circuit. The power-supply unit is configured to supply power to each part provided to the optical test apparatus 10. The recording circuit is configured to record, for example, time-series changes in intensity of the probe beam 51 acquired by the photodetector 13. The recording circuit may be a volatile memory or a non-volatile memory.

The light source provided to the pump beam generating unit 11 according to the present arrangement is, for example, a YAG laser. The pump beam 53 applied by the pump beam generating unit 11 is determined to be a short-pulse laser beam. Herein, in the present arrangement, the pulse width (a pulse width relative to a time-series change in intensity of the laser) of the short-pulse laser beam to be used as a pump beam 53 is, for example, 100 fs (femto seconds), and the wavelength ($\lambda 1$) of the short-pulse laser beam is determined, for example, to be 532 nm (a second harmonic).

The light source provided to the probe beam generating unit 12 according to the present arrangement is, for example, a YAG laser. Herein, in the present arrangement, the wavelength ($\lambda 2$) of a laser beam to be used as a probe beam 51 is, for example, 1064 nm (a fundamental wave).

In this respect, however, light sources provided to the pump beam generating unit 11 and the probe beam generating unit 12, and the wavelengths and pulse widths of beams applied by the light sources are not limited to those described above. For example, the light sources of the pump beam 53 and probe beam 51 may be selected in accordance with the physical properties of a test sample to be used as the specimen 20, and wavelengths required for the pump beam 53 and probe beam 51. The light sources may be solid-state lasers such as a YVO4 laser, and YLF laser or vapor-state lasers such as an excimer laser. Note that the wavelengths required for the pump beam 53 and probe beam 51 will be described in the following explanations.

When a beam such as the pump beam 53 and probe beam 51 is applied to a test sample (specimen 20), the beam is reflected by, transmitted, or absorbed into the irradiated surface of the test sample (the surface 21 of the specimen 20). In the irradiation, the sum of the energy of a beam reflected, the energy of a beam transmitted, and the energy of a beam absorbed is equal to the energy of a beam incident on the irradiated surface (irradiation (arriving flux)).

Herein, an energy density of the beam absorbed by the specimen 20 per unit volume is regarded as a light absorption density. For instance, the further off from the surface 21 (the irradiated surface) into the specimen 20, the more the light absorption density relative to the irradiation (arriving flux) decreases. The depth of a beam absorbed by the specimen 20 is regarded as a light penetration depth ($\zeta$). Based on the irradiated surface (surface 21), the light penetration depth ($\zeta$) is defined as a depth at which the light absorption density is 1/e times the reference value. For example, if the test sample is a single-layer film, the light penetration depth ($\zeta$) is expressed by the following mathematical formula, with the proviso that an imaginary part of the complex refractive index in the irradiated surface of the test sample is denoted by $\kappa$, and the wavelength of the beam is denoted by $\lambda$.

$$\zeta = \frac{\lambda}{4\pi\kappa}$$

Herein, the value of the light penetration depth ($\zeta$) being $\infty$ means that the beam is reflected or transmitted, without being absorbed by the test sample.

Herein, the light penetration depth of the pump beam 53 according to the present arrangement is denoted by $\zeta 1$, and the light penetration depth of the probe beam 51 according to the present arrangement is denoted by $\zeta 2$. That is, the light penetration depth ($\zeta 1$) of the pump beam 53 is expressed as follows.

$$\zeta_1 = \frac{\lambda_1}{4\pi\kappa_1}$$

The light penetration depth ($\zeta 2$) of the probe beam 51 is expressed as follows.

$$\zeta_2 = \frac{\lambda_2}{4\pi\kappa_2}$$

Herein, the light penetration depth ($\zeta 2$) of the probe beam 51 is set to be longer than the light penetration depth ($\zeta 1$) of the pump beam 53.

$$\zeta_1 < \zeta_2 \quad (1)$$

For example, if the test sample is amorphous carbon, an imaginary part $\kappa 1$ of the complex refractive index of the pump beam 53 (wavelength $\lambda 1 = 532$ nm) is nearly identical to an imaginary part x2 of the complex refractive index of the probe beam 51 (wavelength $\lambda 2 = 1064$ nm) ($\approx 0.5$). At that time, the light penetration depth ($\zeta 2$) of the probe beam 51 becomes approximately double the light penetration depth ($\zeta 1$) of the pump beam 53.

Next, the operation of the optical test apparatus 10 according to the present arrangement will be explained. As shown in FIG. 1, the pump beam generating unit 11 applies the pump beam 53 to the test sample surface (the surface 21 of the specimen 20). The pump beam 53 is absorbed to the specimen 20 near the surface 21 of the specimen 20. In the irradiation, a stress arises according to the distribution of the light absorption density and an elastic wave 54 is generated near the irradiated surface (the surface 21). The pulse width (a thickness in the Z direction) of the elastic wave 54 is equal to the light penetration depth ($\zeta 1$) of the pump beam 53.

Herein, one example of a stress distribution in the depth (z) direction of the specimen 20 when an elastic wave 54 is excited, is shown as a pattern diagram in FIG. 2. In the graph shown in FIG. 2, the horizontal axis indicates a depth (z) direction of the specimen 20, and the vertical axis indicates a value of stress arising in the specimen 20. The pulse width of the elastic wave 54 is defined as an area width that the stress becomes, from a peak value $\sigma$, a value ($\sigma$/e) which is 1/e times the peak value a in a stress distribution 55 in the depth direction as shown in FIG. 2. That is, the shorter the light penetration depth ($\zeta 1$) of the pump beam 53 is, a steeper pulse of the elastic wave 54 arises. In contrast, the longer the light penetration depth ($\zeta 1$) of the pump beam 53 is, a more gradual pulse of the elastic wave 54 arises.

Herein, in reference to FIG. 1 again, the operation of the optical test apparatus 10 according to the present arrangement will be further explained. The thus generated elastic wave 54 travels at a speed of sound inherent in the specimen 20 in the depth direction of the specimen 20. The complex refractive index of the specimen 20 at a position where the elastic wave 54 is present differs from the complex refractive index of the specimen 20 at a position where the elastic wave 54 is not present. For this reason, as the elastic wave 54 travels along the depth direction of the specimen 20, changes in the distribution of complex refractive index occur inside the specimen 20.

The probe beam generating unit 12 according to the present arrangement applies the probe beam 51 toward the surface 21 of the specimen 20 at least immediately before and immediately after generation of the elastic wave 54. The photodetector 13 according to the present arrangement receives, from among the probe beams 51, a reflected beam 52 which has been reflected by the surface 21 and measures the intensity of the reflected beam 52. Note that by using a streak camera as a photodetector 13 according to the present arrangement, positional information on the intensity of the received beam on an x-y plane can be obtained. In the present arrangement, the x-y plane is defined as a plane perpendicular to the z direction, and is a plane parallel to the surface 21. The processing circuit 14 according to the present arrangement acquires an intensity of the reflected beam 52 (probe beam 51) measured by the photodetector 13 via a cable 15 and acquires a time-series change in intensity of the reflected beam 52 (probe beam 51) before and after generation of the elastic wave 54. A time-series change in intensity of the reflected beam 52 (probe beam 51) before and after the generation of the elastic wave 54 is denoted by a first reflected beam change.

The elastic wave 54 that is reflected by a rear surface 22 (the opposite surface) of the specimen 20 returns to the surface 21. Note that if an interface having different refractive indexes is present inside the specimen 20, such as a case where the specimen 20 has a structure internally, or a case where a temperature distribution is present inside of the specimen 20, the elastic wave 54 is reflected by the interface and returns to the surface 21. The elastic wave 54 that has returned to the surface 21 is reflected again by the surface 21 and then travels again in the depth direction (the direction to the rear surface 22).

Herein, if the elastic wave 54 has passed through the surface 21 of the specimen 20, the complex refractive index of the surface 21 changes. For this reason, the intensity of the reflected beam 52 (probe beam 51) received by the photodetector 13 changes in a time sequence before and after the elastic wave 54 reaches the surface 21. This change is denoted by a second reflected beam change.

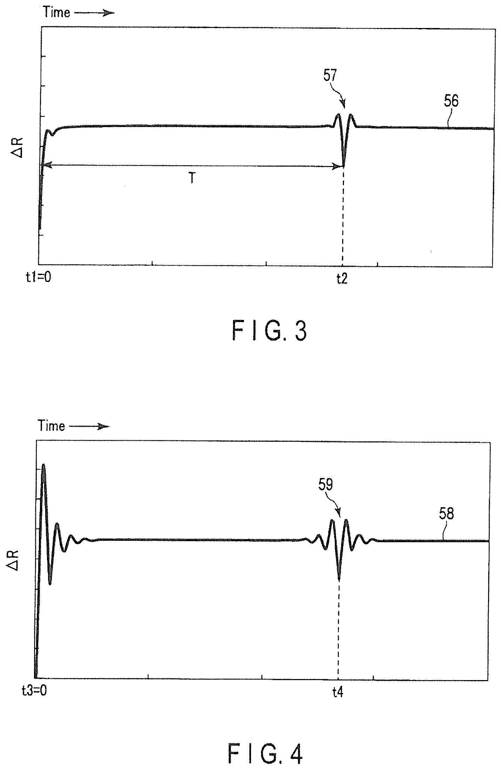

FIG. 3 illustrates one example of theoretical values of time-series changes in intensity of the reflected beam 52 (probe beam 51) as a pattern diagram. In the graph illustrated in FIG 3, the horizontal axis denotes an elapsed time, the vertical axis denotes the intensity of the reflected beam 52, and a solid line 56 denotes time-series changes in intensity of the reflected beam 52 (time-series data of changes in reflectance $\Delta R$). In the graph illustrated in FIG. 3, a time t1 at which the first reflected beam change occurred is denoted by a time 0 (zero).

As described above, if the elastic wave 54 is present in the surface 21, the intensity of the reflected beam 52 changes. Therefore, as shown in FIG. 3, as a time at which the second reflected beam change has occurred, a time t2 is acquired, which is at a position 57 where the value of the time-series change in intensity of the reflected beam 52 is displaced. A time interval T between the first reflected beam change and the second reflected beam change is obtained as a difference between the time t2 and the time t1.

In the optical test apparatus 10 according to the present arrangement, the probe beam generating unit 12 applies the probe beam 51 before or at the same time the pump beam generating unit 11 applies the pump beam 53, and the photodetector 13 measures the intensity of the reflected beam 52 at regular intervals ($\Delta t$). In the measurement, if the value $\Delta t$ is sufficiently small, the photodetector 13 can precisely measure the time interval T between the first reflected beam change and the second reflected beam change.

The processing circuit 14 provided to the optical test apparatus 10 according to the present arrangement can calculate a thickness d of the specimen 20 (information on the specimen 20), if a sound speed is given to the specimen 20, as a product of the sound speed and the time interval T from the first reflected beam change to the second reflected beam change. For example, the sound speed of amorphous carbon is approximately 6 nm/ps.

If there is a defect inside the specimen 20, i.e., there exists a defect of the specimen 20 in an area through which the elastic wave 54 passes, the elastic wave 54 is reflected by the defect to return to the surface 21. In this case, the time interval T denotes a time in which the elastic wave 54 makes a round trip between the surface 21 and the defect. That is, the processing circuit 14 provided to the optical test apparatus 10 according to the present arrangement can detect the presence or absence of a defect inside the specimen 20 (information on the specimen 20). Furthermore, the processing circuit 14 provided to the optical test apparatus 10 according to the present arrangement can calculate, as a product of the time interval T and the sound speed of the specimen 20, a position of the defect inside the specimen 20 (information on the specimen 20). Herein, the value calculated as a position of the defect is a distance between the surface 21 and the defect.

In this way, the optical test apparatus 10 according to the present arrangement enables measurement of the thickness d of the specimen 20, or detection of the presence or absence and the position of a defect. That is, the optical test apparatus 10 allows acquisition of information on the specimen 20.

Upon applying a beam such as the pump beam 53 and the probe beam 51 to the test sample (specimen 20), a temperature increase according to a light absorption density distribution of the specimen 20 occurs. When the light penetration depth ($\zeta$) is short, the temperature distribution inside the specimen 20 becomes steep. Assuming that the light absorption amount of the beam is the same but the light penetration depth ($\zeta$) is different, the shorter the light penetration depth ($\zeta$) is and the steeper the temperature distribution in the specimen 20 becomes, the higher the maximum achieving temperature becomes. The higher the maximum achieving temperature becomes, the higher the possibility of impairment of the specimen 20 becomes. For this reason, to reduce impairment of the specimen 20, it is better to make the light penetration depth ($\zeta$) as long as possible. So, it is preferred to select a light source and a wavelength for at least the probe beam 51 so as to lengthen the light penetration depth ($\zeta$2) .

However, for the pump beam 53, the shorter the light penetration depth ($\zeta$1) is, the larger amplitude of elastic wave 54 is generated. Therefore, the change in complex refractive index inside the specimen 20 at the time when the elastic wave 54 is passing through the specimen 20 is increased, as well. That is, by shortening the light penetration depth ($\zeta$1) of the pump beam 53, the time-series change in intensity of the reflected beam 52 (probe beam 51) received by the photodetector 13 when the elastic wave 54 is passing through the irradiated surface of the probe beam 51 is increased to thereby improve an S/N value (signal-to-noise ratio).

Furthermore, the shorter the light penetration depth ($\zeta$1) of the pump beam 53 is, the shorter the pulse width of the elastic wave 54 becomes, as well. With this configuration, even if the specimen 20 has a thin thickness d, an elastic wave 54 having a sufficiently small pulse width as compared to the thickness d can be generated. At that time, as described above, it becomes possible to distinguish between the first reflected beam change and the second reflected beam change, from the time-series change of the reflected beam 52. However, if the pulse width of the elastic wave 54 is large as compared to the thickness d of the specimen 20, the excited elastic wave 54 does not remain within the specimen 20. For this reason, it becomes difficult to distinguish between the first reflected beam change and the second reflected beam change. That is, the light penetration depth ($\zeta$1) of the pump beam 53 needs to be smaller than the thickness d of the specimen 20, and is required to have the following relationship.

$$\zeta_1 < d \quad (2)$$

Based on the above, the light penetration depth ($\zeta$2) of the probe beam 51 is preferably long, and the light penetration depth ($\zeta$1) of the pump beam 53 is preferably short. That is, preferably, it is necessary to satisfy formula (1). In short, by satisfying the formula (1), an effect is brought about, which allows realization of a reduction in impairment of the specimen 20 and an improvement in the S/N value.

Furthermore, by making the light penetration depth ($\zeta$2) of the probe beam 51 longer than the light penetration depth ($\zeta$1) of the pump beam 53, the probe beam 51 can penetrate deeply into the specimen 20. At that time, the probe beam 51 will reach the elastic wave 54 which exists at a deeper position in the specimen 20, the probe beam 51 is reflected by the elastic wave 54 as an interface, and the reflected beam 52 is received by the photodetector 13.

FIG. 4 illustrates, as a pattern diagram, one example of theoretical values of time-series changes in intensity of the reflected beam 52 when the wavelength of the probe beam 51 is replaced with a long wavelength, as compared to the wavelength of the probe beam 51 shown in FIG. 3. At that time, the light penetration depth ($\zeta$1) of the probe beam 51 is set to be a value of four times the light penetration depth ($\zeta$2) of the pump beam 53. In the graph illustrated in FIG 4, the horizontal axis denotes an elapsed time, the vertical axis denotes the intensity of the reflected beam 52, and a solid line 58 denotes time-series changes in intensity of the reflected beam 52 (time-series data of changes in reflectance $\Delta$R). In the graph illustrated in FIG. 4, a time t3 at which the first reflected beam change occurred is denoted by a time 0 (zero).

From the graph illustrated in FIG. 4, it is clear that an oscillation (fringe 59) occurred in the time-series changes in intensity of the reflected beam 52 in the vicinity of the time t3 at which the first reflected beam change occurred, and in the vicinity of the time t4 at which the second reflected beam change occurred, respectively. Part of the probe beam 51 penetrates deeply into the specimen 20 from the surface 21 and is reflected by the elastic wave 54 as an interface inside the specimen, and thereby the fringe 59 occurs. That is, the fringe 59 can be expressed as the one that is generated as a result of interference between part of the probe beam 51 reflected by the surface 21 (a surface reflected beam) and part of the probe beam 51 reflected by the elastic wave 54 inside the specimen 20 (an interfacially reflected beam). With respect to the fringe 59, the faster the elastic wave 54 is, the shorter the time becomes during which the interference between the surface reflected beam and the interfacially reflected beam occurs, and the fringe 59 takes a waveform having a short cycle. However, the slower the elastic wave 54 is, the fringe 59 takes a waveform with a long cycle.

In this way, the speed of the elastic wave 54 and the waveform of the fringe 59 have a correlation. With this configuration, the processing circuit 14 can extract speed information of the elastic wave 54 from the fringe 59. The speed of the elastic wave 54 (the sound speed of the specimen 20) can be calculated from the density and the rigidity (e.g. an elastic constant) of the specimen 20, and thus if the speed of the elastic wave 54 is found, information on the density and rigidity of the specimen 20 (information on the specimen 20) can be obtained.

Based on the above, by making the light penetration depth ($\zeta$1) of the probe beam 51 longer than the light penetration depth ($\zeta$2) of the pump beam 53, there is an effect of allowing the user to obtain, as information on the specimen 20, not only the film thickness (thickness d) and the presence or absence of a defect, but also information on the density and rigidity of the specimen 20.

Note that generally, to shorten the light penetration depth ($\zeta$2) of the pump beam 53, shortening the wavelength of the pump beam 53 as described above can be considered. However, it can be considered that the light penetration depth ($\zeta$2) of the pump beam 53 can also be shortened not only by shortening the wavelength of the pump beam 53, but also by increasing the incident angle of the pump beam 53 relative to the specimen 20. Actually, it can be theoretically derived that the larger the incident angle of the pump beam 53 relative to the specimen 20 is set, the shorter the light penetration depth ($\zeta$2) of the pump beam 53 becomes. In this case, even if the wavelength of the pump beam 53 is set to be identical to the wavelength of the probe beam 51, the formula (1) is satisfied.

According to the optical test apparatus 10 of the present arrangement, the following can be said. The optical test apparatus 10 of the present arrangement comprises a pump beam generating unit 11 that generates a pump beam 53 which excites an elastic wave 54 in a specimen 20; a probe beam generating unit 12 that generates a probe beam 51; and a photodetector 13 that receives the probe beam 51, wherein a first light penetration depth ($\zeta 2$) of the probe beam 51 relative to the specimen 20 is longer than a second penetration depth ($\zeta 1$) of the pump beam 53 relative to the specimen 20.

This configuration allows a reduction in impairment of the specimen 20 caused by application of the probe beam 51, by lengthening the light penetration depth ($\zeta 2$) of the probe beam 51. In addition, by shortening the light penetration depth ($\zeta 1$) of the pump beam 53, the change in intensity of a reflected beam 52 (probe beam 51) received by the photodetector 13 caused by the elastic wave 54 increases to thereby improve an S/N value. The above-mentioned configuration allows non-contact internal probing of the specimen 20, with high accuracy, while reducing harm to the specimen 20.

The optical test apparatus 10 of the present arrangement further comprises a processing circuit 14 that acquires information on the specimen 20 based on a time-series change in intensity of the probe beam 51, which is received by the photodetector 13 after the elastic wave 54 is excited in the specimen 20.

With this configuration, a thickness d of the specimen 20 can be measured, and the presence or absence of a defect inside the specimen 20 can be detected, based on the sound speed of the specimen 20 and a value of a time interval T from a first reflected beam change to a second reflected beam change. Speed information on the elastic wave 54 can be obtained based on the waveform of the fringe 59. Furthermore, information on the density and rigidity of the specimen 20 can be obtained based on the speed information. Therefore, according to the above-mentioned configuration, it is possible to perform non-contact internal probing of the specimen 20 without harm and to obtain information on the specimen 20.

In the optical test apparatus 10 according to the present arrangement, the specimen 20 has a surface 21 which is present on the side of the pump beam generating unit 11, and an opposite surface (rear surface 22) which is present on the opposite side of the surface 21. The elastic wave 54 propagates inside the specimen 20 from the surface 21 toward the opposite surface, and after being reflected by the opposite surface, or if the specimen 20 has a defect, after being reflected by the defect, the elastic wave 54 propagates toward the surface 21. The probe beam 51 received by the photodetector 13 is a reflected beam 52 which has been emitted from the probe beam generating unit 12 and reflected by the surface 21. A processing circuit 14 provided to the optical test apparatus 10 of the present arrangement calculates, as information on the specimen 20, a distance between the surface 21 and the opposite surface, or if the specimen 20 has a defect, calculates a distance between the surface 21 and the defect, based on a propagation speed (sound speed) of the elastic wave 54 inside the specimen 20, and a time interval T from a first reflected beam change in which the intensity of the probe beam 51 changes from a state before the elastic wave 54 is excited, to a state where the elastic wave 54 has been excited at the surface 21 to a second reflected beam change in which the intensity of the probe beam 51 changes from a state where the elastic wave 54 lies between the surface 21 and the opposite surface, or if the specimen 20 has a defect, the elastic wave 54 lies between the surface 21 and the defect to a state where the elastic wave 54 is positioned on the surface 21.

This configuration allows non-contact internal probing of the specimen 20 without harm, and obtaining a thickness d (a distance between the surface 21 and the rear surface 22 (the opposite surface)) of the specimen 20, or a position of a defect (a distance between the surface 21 and the defect) as information on the specimen 20.

The pump beam generating unit 11 provided to the optical test apparatus 10 of the present arrangement excites a short-pulse laser beam as a pump beam 53. This configuration allows the vicinity of the surface 21 of the specimen 20 absorbing the pump beam 53 to rapidly expand to excite the elastic wave 54 dominantly as compared with the thermal diffusion inside the specimen 20. Therefore, harm to the specimen that could be caused due to the thermal diffusion in the specimen 20 can be reduced, and a temperature (stress) distribution inside the specimen 20 can be made steep.

The pump beam generating unit 11 provided to the optical test apparatus 10 of the present arrangement excites a pump beam 53 that satisfies the following mathematical formula, with the proviso that the second light penetration depth (the light penetration depth of the pump beam 53) is denoted by $\zeta 1$, and a thickness of the specimen 20 is denoted by d.

$$\zeta_1 < d \qquad (2)$$

According to this configuration, an elastic wave 54 having a small pulse width as compared to the thickness d of the specimen 20 can be generated, and thus the configuration makes it easy to distinguish between the first reflected beam change and the second reflected beam change, even if the specimen 20 has a thin thickness d.

The probe beam generating unit 12 provided to the optical test apparatus 10 of the present arrangement applies a probe beam 51 which has a wavelength longer than the wavelength of the pump beam 53 applied by the pump beam generating unit 11. This configuration can make the light penetration depth ($\zeta 1$) of the probe beam 51 longer than the light penetration depth ($\zeta 2$) of the pump beam 53.

The probe beam generating unit 12 provided to the optical test apparatus 10 of the present arrangement is configured so that the incident angle of the probe beam 51 relative to the specimen 20 is smaller than the incident angle of the pump beam 53 relative to the specimen 20. This configuration can make the light penetration depth ($\zeta 1$) of the probe beam 51 longer than the light penetration depth ($\zeta 2$) of the pump beam 53. Furthermore, with this configuration, a spot of the pump beam 53 on the irradiated surface is closer to an ellipse than that of the probe beam 51, and the area of the spot is greater than the area of the spot of the probe beam 51. That is, the spot of the pump beam 53 contains the spot of the probe beam 51. With this configuration, all light beams of the probe beam 51 can be applied to the elastic wave 54 generated from the pump beam 53. That is, this configuration has an advantage in that all light beams of the probe beam 51 are subjected to a reflected beam change caused by the elastic wave 54, and an S/N ratio is improved.

Note that the present arrangement has been explained using an example of a case where the pump beam generating unit 11 applies the pump beam 53 toward the surface 21 of the specimen 20, and the elastic wave 54 is excited in the specimen 20; however, the pump beam generating unit 11 of present arrangement is not limited thereto. For example, the optical test apparatus 10 of the present arrangement may comprise a pressure wave generating unit that outputs a pressure wave such as a sound wave, in place of the pump beam generating unit 11. In this case, the pressure wave generating unit outputs a pressure wave such as a sound wave toward the surface 21 to excite an elastic wave 54 in the specimen 20. The pressure wave generating unit may be configured to not output a pressure wave itself. For example, the pressure generating unit may be configured to apply a pump beam toward the surface 21 of the specimen 20, and locally heat the surface 21 to vaporize and excite an elastic wave by a pressure wave generated when part of the surface 21 vaporizes. In this case, information on the specimen 20 can be acquired in the same manner as in the optical test apparatus 10 of the present arrangement described above. However, this case does not take a nondestructive test as explained above, although the specimen 20 is subjected to a non-contact test. The optical test apparatus 10 of the present arrangement may further comprise, for example, a stress transmitting.unit configured to excite an elastic wave 54 by applying a stress to the surface 21 through physical contact with the specimen 20, in place of the pump beam generating unit 11. In this case, information on the specimen 20 can be acquired in the same manner as in the optical test apparatus 10 of the present arrangement described above, however, this case does not take a non-contact/nondestructive test as explained above.

Note that the processing circuit 14 of the present arrangement has been explained using an example of a case where the intensity of the reflected beam 52 measured by the photodetector 13 is obtained via a cable 15, however, the processing circuit 14 of the present arrangement is not limited thereto. The connection between the photodetector 13 and the processing circuit 14 may be wired or may be wireless. In both cases, the same effect as in the optical test apparatus 10 described above can be obtained.

(Second Arrangement)

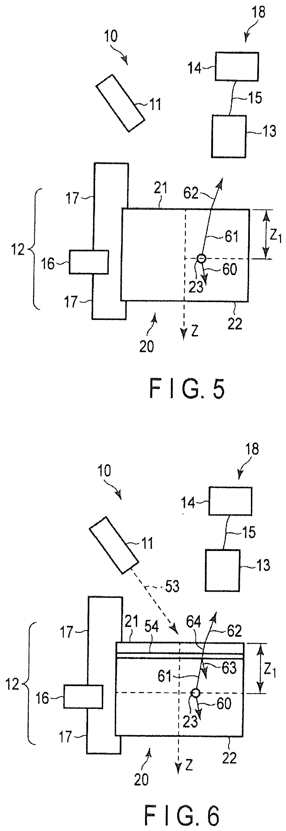

In a semiconductor such as SiC, a crystal defect may sometimes occur inside thereof during a manufacturing process. In this case, by identifying the position of the defect, the type of the defect and the cause thereof can be estimated, and thus a technique of identifying the position of a defect is in demand. Especially, it is difficult to measure the position of a test sample in the depth direction (z direction). So, the position of the defect in the depth direction is identified by utilizing a characteristic that when an electric field (voltage, electric charge) is applied to a test sample, the crystal defect isotropically emits light. Hereinafter, the optical test apparatus 10 according to the present arrangement will be explained in detail with reference to FIGs. 5 to 8.

The configuration of the optical test apparatus 10 according to the present arrangement is first explained. FIG. 5 illustrates, as a pattern diagram, a schematic configuration example of the optical test apparatus 10 according to the present arrangement. FIG. 5 also illustrates a pattern diagram showing an overhead view of a cross-section of a test sample (specimen 20). This cross-section includes the depth direction (z direction) of the specimen 20. A crystal defect 23 exists in the cross-section of the specimen 20. The position of the defect 23 in the z direction (a distance from the surface 21 of the specimen 20) is regarded as z1.

The probe beam generating unit 12 provided to the optical test apparatus 10 of the present arrangement comprises an electric field generating unit 16 and wiring 17, unlike the probe beam generating unit 12 according to the first arrangement. The electric field generating unit 16 applies an electric field (voltage, electric charge) to the specimen 20 via the wiring 17.

In the specimen 20 of the present arrangement, the defect 23 inside thereof isotropically emits light beams by the applied electric field (voltage, electric charge). The specimen 20 of the present arrangement will be explained on the assumption that the specimen 20 is, for example, SiC, however, the specimen 20 is not limited thereto. Any sample may be used for specimen 20, as long as it is a sample in which a crystal defect 23 emits light by application of an electric field (voltage, electric charge).

FIG. 5 also illustrates one example of light beams isotropically emitted from the defect 23. In the present arrangement, an emitted beam emitted in this way from the defect 23 existing inside the specimen 20 is used as a probe beam 51.

The photodetector 13 according to the present arrangement is placed so as to receive an emitted beam that is emitted from the defect 23 and passed through the specimen 20. Therefore, for example, as shown in FIG. 5, of the emitted beams such as an emitted beam 60 and an emitted beam 61 which have been emitted from the defect 23, the emitted beam 61 that has passed through the specimen 20 to reach the photodetector 13 is to be received as a transmitted beam 62 by the photodetector 13.

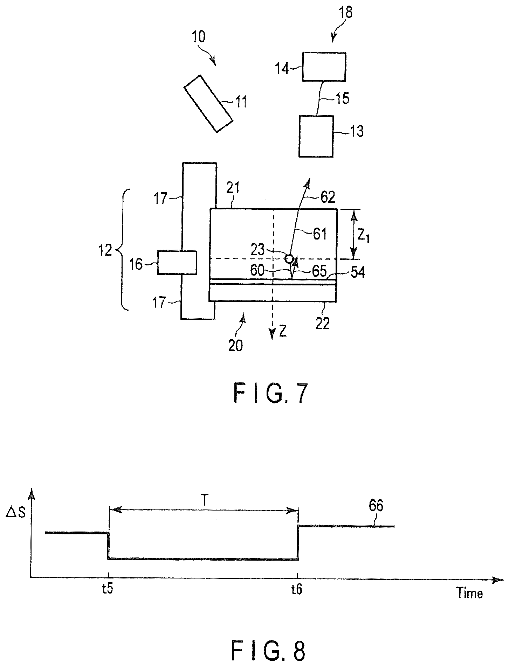

Next, the operation of the optical test apparatus 10 according to the present arrangement will be explained. FIGs. 6 and 7 respectively illustrate, as a pattern diagram, one example of a cross-section including the depth direction of the specimen 20 according to the present arrangement and light beams.

FIG. 6 illustrates an appearance of an elastic wave 54 which is present between the surface 21 and the defect 23. As with the pump beam generating unit 11 according to the first arrangement, a pump beam 53 is applied to the surface 21 of the specimen 20 from the pump beam generating unit 11 of the present arrangement, and an elastic wave 54 is excited at the surface 21. The excited elastic wave 54 propagates into the specimen 20 in the depth direction as shown in FIG. 6. Note that as explained above in the first arrangement, the pulse width of the elastic wave 54 is equal to the light penetration depth ($\zeta 1$) of the pump beam 53.

FIG. 7 illustrates an appearance of the elastic wave 54 which has further propagated in the depth (z) direction from the state shown in FIG. 6, and has passed through the defect 23. That is, FIG. 7 illustrates an appearance where the elastic wave 54 is present between the defect 23 and a rear surface 22.

The elastic wave 54 changes a complex refractive index inside the specimen 20, and thus in the state illustrated in FIG. 6, of the emitted beams 61 emitted from the defect 23 with the elastic wave 54 serving as an interface, part of the emitted beams 61 is reflected as an interfacially reflected beam 63, and part of them passes through the interface as an interfacially transmitted beam 64. With this configuration, the intensity of the transmitted beam 62 that is incident on the photodetector 13 is reduced as compared to the transmitted beam 62 that is incident onto the photodetector 13 in the state shown in FIG. 5. This phenomenon is denoted as a first transmitted beam change.

However, if the elastic wave 54 has passed through the defect 23 as shown in FIG. 7, the emitted beam 60 traveling toward the elastic wave 54 is reflected as an interfacially reflected beam 65, with the elastic wave 54 serving as an interface. With this configuration, the emitted beam 61 and the interfacially reflected beam 65 in a state where the intensity thereof is not reduced by the elastic wave 54, are to be received by the photodetector 13 as transmitted beams 62, and the intensity of the transmitted beams 62 is increased. This phenomenon is denoted as a second transmitted beam change.

In light of the above, FIG. 8 illustrates one example of a time-series change in intensity $\Delta S$ of the transmitted beam 62 as a pattern diagram. In the graph illustrated in FIG 8, the horizontal axis denotes an elapsed time, the vertical axis denotes the intensity of the transmitted beam 62, and a solid line 66 denotes time-series changes in intensity of the transmitted beam 62.

As shown in FIG. 8, a time interval between the first transmitted beam change and the second transmitted beam change is denoted as T. As a product of the time interval T and a speed of the elastic wave 54, a position z1 of the defect 23 in the depth (z) direction can be calculated. Note that the position in the x-y plane can be obtained in the same manner as in the first arrangement. In short, if the optical test apparatus 10 of the present arrangement is used, there is an effect that the position of the defect 23 can be detected.

It has been known that if a stress is applied to a defect, a peak value of an emission spectrum of an emitted beam that has been emitted from the defect slightly changes. When the elastic wave 54 is passing through the defect 23 inside the specimen 20, a stress is applied to the defect 23 by the elastic wave 54. For this reason, the emission spectrum of the emitted beam which is emitted from the defect 23 slightly changes.

The photodetector 13 of the present arrangement may be, for example, a photodetector that comprises a spectroscope and is capable of spectral splitting. This spectroscope is, for example, a diffraction grating, however, is not limited thereto. For example, a spectroscopic prism may be used.

The photodetector 13 provided with the spectroscope detects a change in the emission spectrum caused by passing of the elastic wave 54, by spectrophotometric measurements. Provided with such a configuration, the optical test apparatus 10 of the present arrangement has an effect of allowing measurements of the position of the defect 23 in an assured manner and with accuracy. That is, use of the photodetector 13 capable of detecting at least two different wavelengths brings about high accuracy of detection of a defect. Herein, the at least two different wavelengths include, of the dispersed wavelengths of the emission spectrum, wavelengths before and after a change in wavelength when the elastic wave 54 is passing through the defect 23 (a stress is applied to the defect 23).

According to the optical test apparatus 10 of the present arrangement, the following can be said. In the optical test apparatus 10 of the present arrangement, the specimen 20 has a surface 21 which is present on the side of the pump beam generating unit 11, and an opposite surface (rear surface 22) which is present on the opposite side of the surface 21. The elastic wave 54 propagates inside the specimen 20 from the surface 21 toward the opposite surface. The probe beam 51 received by the photodetector 13 is a transmitted beam 62 which has been emitted from the defect 23 possessed by the specimen 20 and has passed through the specimen 20. The processing circuit 14 provided to the optical test apparatus 10 of the present arrangement calculates, as information on the specimen 20, a distance between the surface 21 and the defect 23, from a propagation speed (sound speed) of the elastic wave 54 inside the specimen 20, and calculates a time interval T between a first transmitted beam change, in which the intensity of the probe beam 51 changes from a state before the elastic wave 54 is excited to a state where the elastic wave 54 has been excited at the surface 21, and a second transmitted beam change, in which the intensity of the probe beam 51 changes from a state where the elastic wave 54 lies between the surface 21 and the defect 23 to a state where the elastic wave 54 lies between the defect 23 and the opposite surface.

This configuration allows non-contact internal probing of the specimen without harm by using the beam emitted from the defect 23 as a probe beam 51 to obtain a position of the defect 23 (a distance between the surface 21 and the defect 23) in the specimen 20 as information on the specimen 20.

The probe beam generating unit 12 provided to the optical test apparatus 10 of the present arrangement applies an electric field to the specimen 20 to generate a probe beam 51. According to this configuration, the transmitted beam 62 that has been emitted from the defect 23 present inside the specimen 20 and has transmitted through the specimen 20 can be used as a probe beam 51. That is, a time-series change in photo-detection intensity of the transmitted beam 62 (probe beam 51) can be acquired by the photodetector 13. Therefore, by using the optical test apparatus 10 of the present arrangement, it is possible to detect the position of the defect 23 that emits beams by a simple means for applying an electric field to a specimen 20.

The photodetector 13 provided to the optical test apparatus 10 of the present arrangement is configured to receive at least two different wavelengths. According to this configuration, it is possible to detect a change in the emission spectrum of an emitted beam which is emitted from the defect 23 and generated when the elastic wave 54 is passing through the defect 23 in the specimen 20. For this reason, the position of the defect 23 can be reliably and accurately measured.

Note that the present arrangement has been explained using an example of a case where the defect 23 inside the specimen 20 isotropically emits beams by an applied electric field (voltage, electric charge), however, the regions of the specimen 20 other than the defect 23 may emit beams concurrently with the time when the defect 23 isotropically emits beams. Even if a difference in emission intensity between, for example, the defect 23 and the regions of the specimen 20 other than the defect 23 is small, the position of the defect 23 can be obtained as long as the emission of the defect 23 can be detected from a difference in the time direction of the emission intensity.

(Third Arrangement)

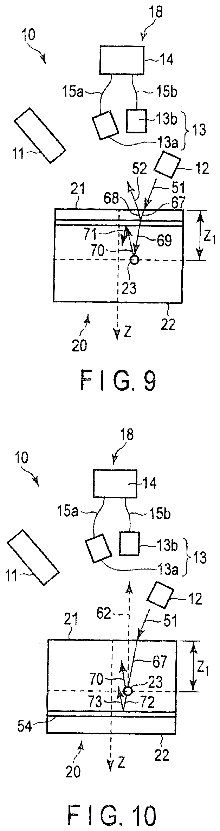

Hereinafter, the optical test apparatus 10 according to the present arrangement will be described in detail with reference to FIGs. 9 and 10.

The configuration of the optical test apparatus 10 according to the present arrangement is first explained. FIGs. 9 and 10 respectively illustrate, as a pattern diagram, a configuration example of the optical test apparatus 10 according to the present arrangement. FIG. 9 illustrates a state where a pump beam 53 is applied to a specimen, an elastic wave 54 is generated, and the elastic wave 54 travels in the depth direction. FIG. 10 illustrates an appearance of the elastic wave 54 which has further deeply traveled from the state shown in FIG. 9 and has passed through the defect 23.

FIGs. 9 and 10 also respectively illustrate a pattern diagram showing an overhead view of a cross-section of a test sample (specimen 20). The cross-section includes the depth direction (z direction) of the specimen 20. A crystal defect 23 is present in the cross-section of the specimen 20. The position of the defect 23 in the z direction (a distance from the surface 21 of the specimen 20) is denoted as z1. In the present arrangement, the specimen 20 of the present arrangement will be explained on the assumption that the specimen 20 is an SiC, however, the specimen 20 is not limited thereto. FIGs. 9 and 10 illustrate one example of light beams, as well.

As shown in FIGs. 9 and 10, in the present arrangement, no electric field is applied to the specimen 20, unlike the case explained in the second arrangement. The optical test apparatus 10 according to the present arrangement comprises the same probe beam generating unit 12 as explained, for example, in the first arrangement.

Next, the operation of the optical test apparatus 10 according to the present arrangement will be explained. A pump beam generating unit 11 provided to the optical test apparatus 10 according to the present arrangement applies a pump beam 53 to a surface 21 of a specimen 20 to excite an elastic wave 54 in the specimen 20. The pulse width of the elastic wave 54 is equal to the light penetration depth ($\zeta$1).

The probe beam generating unit 12 according to the present arrangement applies a probe beam 51 to the surface 21. Note that the light penetration depth ($\zeta$2) of the probe beam 51 relative to the specimen 20 is set to be longer than the light penetration depth ($\zeta$1) of the pump beam 53. When the probe beam 51 passes into the specimen 20 and bumps against a defect 23, the probe beam 51 is scattered by the defect 23.

The photodetector 13 provided to the optical test apparatus 10 of the present arrangement comprises two photodetectors, a first photodetector 13a and a second photodetector 13b so as to receive the beams scattered from the defect 23 at two angles which are different from each other. The first photodetector 13a is placed so as to be capable of receiving the probe beam 51 reflected by the surface 21. The second photodetector is placed so as to be capable of receiving light beams that transmit, for example, perpendicularly relative to the surface 21.

As shown in FIG. 9, when the pump beam 53 is applied to the specimen 20, an elastic wave 54 is generated. At that time, if the probe beam 51 is applied toward the specimen 20, part of the probe beam 51 enters the specimen 20 from the surface 21 to be transmitted thereinto (transmitted beam 67). Since the elastic wave 54 changes the complex refractive index inside the specimen 20, part of the transmitted beam 67 is reflected by the elastic wave 54 as an interface (an interfacially reflected beam 68), and part of the transmitted beam 67 passes through the elastic wave 54 and then is transmitted in the deeper direction (an interfacially transmitted beam 69). The interfacially reflected beam 68 passes through the specimen 20 toward the surface 21 and reaches, as a reflected beam 52, the first photodetector 13a. In contrast, when the interfacially transmitted beam 69 reaches the defect 23, the interfacially transmitted beam 69 is scattered by the defect 23, and a scattered component (a scattered beam 70) in the direction traveling toward the photodetector 13 is generated. However, part of the scattered beam 70 is reflected by the elastic wave 54 before it reaches the photodetector 13 (an interfacially reflected beam 71). For this reason, of the scattered beams 70, only part of the scattered beams 70 that have passed the elastic wave 54 reaches the photodetector 13.

In this way, after the elastic wave 54 is generated, the intensity of the scattered components received by the photodetector 13 decreases. A change in intensity of a received signal in the photodetector 13 immediately after generation of an elastic wave 54 is regarded as a first transmitted beam change. Note that the change in intensity of the received signal also includes a change caused by the presence or absence of a received signal.

On the other hand, if the elastic wave 54 has passed through the defect 23 as shown in the state shown in FIG. 10, of the probe beams 51, the transmitted beam 67 that has entered the specimen 20 can directly reach the defect 23 without reflection losses due to the elastic wave 54, and are scattered. The scattered components can reach the photodetector 13 without reflection losses due to the elastic wave 54. That is, the intensity of the scattered components reaching the photodetector 13 shown in FIG. 10 is greater than the intensity of the scattered components in the state shown in FIG. 9. A change in intensity of the received signal immediately after the elastic wave 54 has passed through the defect 23 is regarded as a second transmitted beam change.

A time interval between the first transmitted beam change and the second transmitted beam change is regarded as T. As a product of the time interval T and the speed of the elastic wave 54, a position z1 of the defect 23 in the depth direction can be calculated. In short, if the optical test apparatus 10 of the present arrangement is used, there is an effect of allowing detection of the defect 23.

Herein, the second photodetector 13b can receive, of the components scattered by the defect 23 like the scattered beam, only light beams that have passed through the specimen 20 as indicated, for example, by the dotted arrow (transmitted beam 62) in FIG. 10. In short, there is an effect that the presence or absence of the defect 23 can be distinguished by the presence or absence of a signal of the second photodetector 13b.

According to the optical test apparatus 10 of the present arrangement, the following can be said. In the optical test apparatus 10 of the present arrangement, the specimen 20 has a surface 21 which is present on the side of the pump beam generating unit 11, and an opposite surface (rear surface 22) which is present on the opposite side of the surface 21. The elastic wave 54 propagates inside the specimen 20 from the surface 21 toward the opposite surface. The probe beam 51 received by the photodetector 13 is a transmitted beam 62 which is emitted from the probe beam generating unit 12, scattered by the defect 23 provided to the specimen 20, and has passed through the inside of the specimen 20. The processing circuit 14 provided to the optical test apparatus 10 of the present arrangement calculates, as information on the specimen 20, a distance between the surface 21 and the defect 23, from a propagation speed of the elastic wave 54 inside the specimen 20 (sound speed of the specimen 20), and a time interval T between a first transmitted beam change in which the intensity of the probe beam 51 changes from a state before the elastic wave 54 is excited to a state where the elastic wave 54 has been excited at the surface 21 and a second transmitted beam change in which the intensity of the probe beam 51 changes from a state where the elastic wave 54 lies between the surface 21 and the defect 23 to a state where the elastic wave 54 lies between the defect 23 and the opposite surface.

This configuration allows non-contact internal probing of the specimen 20 without harm by using the beams scattered by the defect 23 as a probe beam 51 and acquiring, as information on the specimen 20, the position of the defect 23 in the specimen 20 (a distance between the surface 21 and the defect 23).

The photodetector 13 provided to the optical test apparatus 10 of the present arrangement is configured to receive probe beams 51 at at least two different angles relative to the specimen 20. According to this configuration, a transmitted beam 62 that has been scattered by the defect 23 existing inside the specimen 20 and transmitted inside the specimen 20 can be used as a probe beam 51. That is, a time-series change in photodetection intensity of the transmitted beam 62 (probe beam 51) can be acquired by the photodetector 13. Therefore, the position of the defect 23 can be detected by using the optical test apparatus 10 of the present arrangement.

Note that the first, second, and third arrangements of the present disclosure have been explained using an example in a case where in optical test apparatus 10, the pump beam generating unit 11 is configured to apply the pump beam 53 to the surface 21 to excite the elastic wave 54 at the surface 21 of the specimen 20, and the photodetector 13 is configured to receive beams traveling from the surface 21 toward the photodetector 13, however, the arrangements of the optical test apparatus 10 are not limited thereto. For example, the pump beam generating unit 11 according to each of these arrangements may be configured to apply the pump beam 53 to the rear surface 22 to excite the elastic wave 54 at the rear surface 22.

For example, the pump beam generating unit 11 according to the first arrangement outputs a first signal to the processing circuit 14 at the time of application of the pump beam 53. The photodetector 13 according to the first arrangement outputs a second signal to the processing circuit 14 upon detecting that the elastic wave 54 has reached the surface 21. The processing circuit 14 according to the first arrangement calculates a thickness d as a product of a time interval between the first signal and the second signal with a speed of the elastic wave 54.

For example, the pump beam generating unit 11 according to the second and third arrangements outputs the first signal to the processing circuit 14 at the time of application of the pump beam 53. The photodetector 13 according to the second and third arrangements outputs a second signal to the processing circuit 14 upon detecting that the elastic wave 54 has reached the defect 23. The processing circuit 14 according to the second and third arrangements calculates a position of the defect 23 (a distance from the rear surface 22) as a product of a time interval between the first signal and the second signal with a speed of the elastic wave 54.

For example, the photodetector 13 according to the second and third arrangements outputs the first signal to the processing circuit 14 upon detecting that the elastic wave 54 has reached the defect 23, and outputs a second signal to the processing circuit 14 upon detecting that the elastic wave 54 has reached the surface 21. The processing circuit 14 according to the second and third arrangements calculates a position of the defect 23 (a distance from the surface 21) as a product of a time interval between the first signal and the second signal with a speed of the elastic wave 54.

While certain arrangements have been described, these arrangements have been presented by way of example only, and are not intended to limit the scope of the claims. Indeed, the apparatuses described herein may be embodied in a variety of other forms; furthermore, various omissions, substitutions, and changes in the form of the apparatuses described herein may be made.

**Claims**

1. An optical test apparatus (10) comprising:

   a pump beam generating unit (11) that generates a pump beam for exciting an elastic wave in a specimen;
   a probe beam generating unit (12) that generates a probe beam; and
   a photodetector (13) that receives the probe beam,
   wherein the probe beam generating unit (12) is configured so that an incident angle of the probe beam relative to the specimen is smaller than an incident angle of the pump beam relative to the specimen, and
   wherein a first light penetration depth of the probe beam relative to the specimen is longer than a second light penetration depth of the pump beam relative to the specimen,
   the optical test apparatus (10) further comprising:

   a processing circuit (14) that acquires information on the specimen based on a time-series change in intensity of the probe beam received by the photodetector (13) after the elastic wave is excited in the specimen,
   wherein the specimen has a surface which is present on the side of the pump beam generating unit (11), and an opposite surface which is present on the opposite side of the surface,
   wherein the elastic wave propagates inside the specimen from the surface toward the opposite surface, and after being reflected by the opposite surface, or if the specimen has a defect, after being reflected by the defect, the elastic wave propagates toward the surface,
   wherein the probe beam to be received by the photodetector (13) is a reflected beam which has been emitted from the probe beam generating unit (12) and has been reflected by the surface, and
   wherein the processing circuit (14) calculates, as information on the specimen, a distance between the surface and the opposite surface or, if the specimen has the defect, a distance between the surface and the defect, from a propagation speed of the elastic wave inside the specimen, and a time interval between a first reflected beam change where an intensity of the probe beam changes from a state before the elastic wave is excited, to a state where the elastic wave has been excited at the surface and a second reflected beam change where the intensity of the probe beam changes from a state where the elastic wave lies between the surface and the opposite surface, or if the specimen has the defect, the elastic wave lies between the surface and the defect to a state where the elastic wave lies on the surface.

2. An optical test apparatus (10) comprising:

a pump beam generating unit (11) that generates a pump beam for exciting an elastic wave in a specimen;
a probe beam generating unit (12) that generates a probe beam; and
a photodetector (13) that receives the probe beam,
wherein the probe beam generating unit (12) is configured so that an incident angle of the probe beam relative to the specimen is smaller than an incident angle of the pump beam relative to the specimen, and
wherein a first light penetration depth of the probe beam relative to the specimen is longer than a second light penetration depth of the pump beam relative to the specimen,
the optical test apparatus (10) further comprising:

a processing circuit (14) that acquires information on the specimen based on a time-series change in intensity of the probe beam received by the photodetector (13) after the elastic wave is excited in the specimen,
wherein the specimen has a surface which is present on the side of the pump beam generating unit (11), and an opposite surface which is present on the opposite side of the surface,
wherein the elastic wave propagates inside the specimen from the surface toward the opposite surface,
wherein the probe beam to be received by the photodetector (13) is a transmitted beam which has been emitted from the probe beam generating unit (12), scattered by a defect possessed by the specimen and has passed through the specimen, and
wherein the processing circuit (14) calculates, as information on the specimen, a distance between the surface and the defect from a propagation speed of the elastic wave inside the specimen, and a time interval between a first transmitted beam change where an intensity of the probe beam changes from a state before the elastic wave is excited to a state where the elastic wave has been excited at the surface and a second transmitted beam change where the intensity of the probe beam changes from a state where the elastic wave lies between the surface and the defect to a state where the elastic wave lies between the defect and the opposite surface.

3. The optical test apparatus (10) according to claim 1 or 2, wherein the photodetector (13) is configured to receive the probe beam at at least two different angles relative to the specimen.

4. The optical test apparatus (10) according to claim 1 or 2, wherein the pump beam generating unit (11) applies a short-pulse laser beam as the pump beam.

5. The optical test apparatus (10) according to claim 1 or 2, wherein the pump beam generating unit (11) applies the pump beam that satisfies the following mathematical formula,

$$\zeta_1 < d$$

where the second light penetration depth is denoted by $\zeta_1$, and a thickness of the specimen is denoted by d.

6. The optical test apparatus (10) according to claim 1 or 2, wherein the probe beam generating unit (12) applies the probe beam that has a wavelength longer than a wavelength of the pump beam applied by the pump beam generating unit (11).

**Patentansprüche**

1. Eine optische Prüfvorrichtung (10), aufweisend:

eine Pumpstrahlerzeugungseinheit (11), die einen Pumpstrahl zum Anregen einer elastischen Welle in einer Probe erzeugt;
eine Sondenstrahlerzeugungseinheit (12), die einen Sondenstrahl erzeugt; und
einen Photodetektor (13), der den Sondenstrahl empfängt,
wobei die Sondenstrahlerzeugungseinheit (12) so konfiguriert ist, dass ein Einfallswinkel des Sondenstrahls relativ zu der Probe kleiner ist als ein Einfallswinkel des Pumpstrahls relativ zu der Probe, und
wobei eine erste Lichtdurchdringungstiefe des Sondenstrahls relativ zu der Probe länger ist als eine zweite Lichtdurchdringungstiefe des Pumpstrahls relativ zu der Probe,
wobei die optische Testvorrichtung (10) ferner aufweist:

eine Verarbeitungsschaltung (14), die Informationen über die Probe basierend auf einer Zeitreihenänderung der Intensität des von dem Photodetektor (13) empfangenen Sondenstrahls akquiriert, nachdem die elastische Welle in der Probe angeregt wurde,

wobei die Probe eine Oberfläche aufweist, die sich auf der Seite der Pumpstrahlerzeugungseinheit (11) befindet, und eine gegenüberliegende Oberfläche, die sich auf der gegenüberliegenden Seite der Oberfläche befindet,

wobei sich die elastische Welle innerhalb der Probe von der Oberfläche in Richtung der gegenüberliegenden Oberfläche ausbreitet, und nachdem sie von der gegenüberliegenden Oberfläche reflektiert wurde, oder falls die Probe einen Defekt aufweist, nachdem sie von dem Defekt reflektiert wurde, sich die elastische Welle in Richtung der Oberfläche ausbreitet,

wobei der von dem Photodetektor (13) zu empfangende Sondenstrahl ein reflektierter Strahl ist, der von der Sondenstrahlerzeugungseinheit (12) emittiert und von der Oberfläche reflektiert worden ist, und

wobei die Verarbeitungsschaltung (14) als Information über die Probe einen Abstand zwischen der Oberfläche und der gegenüberliegenden Oberfläche berechnet, oder, falls die Probe den Defekt aufweist, einen Abstand zwischen der Oberfläche und dem Defekt aus einer Ausbreitungsgeschwindigkeit der elastischen Welle innerhalb der Probe und einem Zeitintervall zwischen einer ersten reflektierten Strahländerung, bei der sich eine Intensität des Sondenstrahls von einem Zustand vor der Anregung der elastischen Welle zu einem Zustand ändert, in dem die elastische Welle an der Oberfläche angeregt worden ist, und einer zweiten reflektierten Strahländerung, bei der sich die Intensität des Sondenstrahls von einem Zustand, in dem die elastische Welle zwischen der Oberfläche und der gegenüberliegenden Oberfläche liegt, oder, falls die Probe den Defekt aufweist, die elastische Welle zwischen der Oberfläche und dem Defekt liegt, zu einem Zustand ändert, in dem die elastische Welle auf der Oberfläche liegt.

2. Eine optische Prüfvorrichtung (10), aufweisend:

eine Pumpstrahlerzeugungseinheit (11), die einen Pumpstrahl zum Anregen einer elastischen Welle in einer Probe erzeugt;

eine Sondenstrahlerzeugungseinheit (12), die einen Sondenstrahl erzeugt; und

einen Photodetektor (13), der den Sondenstrahl empfängt,

wobei die Sondenstrahlerzeugungseinheit (12) so konfiguriert ist, dass ein Einfallswinkel des Sondenstrahls relativ zu der Probe kleiner ist als ein Einfallswinkel des Pumpstrahls relativ zur Probe, und

wobei eine erste Lichtdurchdringungstiefe des Sondenstrahls relativ zu der Probe länger ist als eine zweite Lichtdurchdringungstiefe des Pumpstrahls relativ zu der Probe,

wobei die optische Testvorrichtung (10) ferner aufweist:

eine Verarbeitungsschaltung (14), die Informationen über die Probe basierend auf einer Zeitreihenänderung der Intensität des von dem Photodetektor (13) empfangenen Sondenstrahls akquiriert, nachdem die elastische Welle in der Probe angeregt wurde,

wobei die Probe eine Oberfläche aufweist, die sich auf der Seite der Pumpstrahlerzeugungseinheit (11) befindet, und eine gegenüberliegende Oberfläche, die sich auf der gegenüberliegenden Seite der Oberfläche befindet,

wobei sich die elastische Welle innerhalb der Probe von der Oberfläche in Richtung der gegenüberliegenden Oberfläche ausbreitet,

wobei der von dem Photodetektor (13) zu empfangende Sondenstrahl ein übertragener Strahl ist, der von der Sondenstrahlerzeugungseinheit (12) emittiert worden ist, an einem Defekt der Probe gestreut wurde und die Probe durchquert hat, und

wobei die Verarbeitungsschaltung (14) als Informationen über die Probe einen Abstand zwischen der Oberfläche und dem Defekt aus einer Ausbreitungsgeschwindigkeit der elastischen Welle innerhalb der Probe und einem Zeitintervall zwischen einer ersten übertragenen Strahländerung, bei der sich eine Intensität des Sondenstrahls von einem Zustand vor der Anregung der elastischen Welle zu einem Zustand, bei dem die elastische Welle an der Oberfläche angeregt worden ist, ändert, und einer zweiten übertragenen Strahländerung berechnet, bei der sich die Intensität des Sondenstrahls von einem Zustand, bei dem die elastische Welle zwischen der Oberfläche und dem Defekt liegt, zu einem Zustand, bei dem die elastische Welle zwischen dem Defekt und der gegenüberliegenden Oberfläche liegt, ändert.

3. Die optische Prüfvorrichtung (10) nach Anspruch 1 oder 2, wobei der Photodetektor (13) konfiguriert ist, um den Sondenstrahl in mindestens zwei verschiedenen Winkeln relativ zu der Probe zu empfangen.

4. Die optische Prüfvorrichtung (10) nach Anspruch 1 oder 2, wobei die Pumpstrahlerzeugungseinheit (11) einen Kurzimpuls-Laserstrahl als den Pumpstrahl anwendet.

5. Die optische Prüfvorrichtung (10) nach Anspruch 1 oder 2, wobei die Pumpstrahlerzeugungseinheit (11) den Pumpstrahl anwendet, der die folgende mathematische Formel erfüllt,

$$\zeta_1 < d$$

wobei die zweite Lichtdurchdringungstiefe mit $\zeta_1$ bezeichnet wird, und eine Dicke der Probe mit d bezeichnet wird.

6. Die optische Testvorrichtung (10) nach Anspruch 1 oder 2, wobei die Sondenstrahlerzeugungseinheit (12) den Sondenstrahl anwendet, der eine Wellenlänge aufweist, die länger ist als eine Wellenlänge des von der Pumpstrahlerzeugungseinheit (11) angewendeten Pumpstrahls.

**Revendications**

1. Appareil de test optique (10) comprenant :

une unité de génération de faisceau pompe (11) qui génère un faisceau pompe pour l'excitation d'une onde élastique dans un spécimen ;
une unité de génération de faisceau sonde (12) qui génère un faisceau sonde ; et
un photodétecteur (13) qui reçoit le faisceau sonde,
dans lequel l'unité de génération de faisceau sonde (12) est conçue de sorte qu'un angle incident du faisceau sonde par rapport au spécimen est inférieur à un angle incident du faisceau pompe par rapport au spécimen et
dans lequel une première profondeur de pénétration de la lumière du faisceau sonde par rapport au spécimen est supérieure à une deuxième profondeur de pénétration de la lumière du faisceau pompe par rapport au spécimen,
l'appareil de test optique (10) comprenant en outre :

un circuit de traitement (14) qui acquiert des informations sur le spécimen sur la base d'un changement chronologique d'intensité du faisceau sonde reçu par le photodétecteur (13) après que l'onde élastique est excitée dans le spécimen,
dans lequel le spécimen présente une surface qui est présente sur le côté de l'unité de génération de faisceau pompe (11) et une surface opposée qui est présente sur le côté opposé de la surface,
dans lequel l'onde élastique se propage à l'intérieur du spécimen de la surface en direction de la surface opposée et, après avoir été réfléchie par la surface opposée ou, si le spécimen présente un défaut, après avoir été réfléchie par le défaut, l'onde élastique se propage en direction de la surface,
dans lequel le faisceau sonde reçu par le photodétecteur (13) est un faisceau réfléchi qui a été émis par l'unité de génération de faisceau sonde (12) et a été réfléchie par la surface et
dans lequel le circuit de traitement (14) calcule, en tant qu'informations sur le spécimen, une distance entre la surface et la surface opposée ou, si le spécimen présente le défaut, une distance entre la surface et le défaut, à partir d'une vitesse de propagation de l'onde élastique à l'intérieur du spécimen, et un intervalle de temps entre un premier changement de faisceau réfléchi, dans lequel une intensité du faisceau sonde change d'un état avant que l'onde élastique soit excitée vers un état dans lequel l'onde élastique a été excitée à la surface et un deuxième changement de faisceau réfléchi dans lequel l'intensité du faisceau sonde change d'un état dans lequel l'onde élastique se trouve entre la surface et la surface opposée ou, si le spécimen présente le défaut, l'onde élastique se trouve entre la surface et le défaut, vers un état dans lequel l'onde élastique se trouve sur la surface.

2. Appareil de test optique (10) comprenant :

une unité de génération de faisceau pompe (11) qui génère un faisceau pompe pour l'excitation d'une onde élastique dans un spécimen ;
une unité de génération de faisceau sonde (12) qui génère un faisceau sonde ; et
un photodétecteur (13) qui reçoit le faisceau sonde,
dans lequel l'unité de génération de faisceau sonde (12) est conçue de sorte qu'un angle incident du faisceau sonde par rapport au spécimen est inférieur à un angle incident du faisceau pompe par rapport au spécimen et
dans lequel une première profondeur de pénétration de la lumière du faisceau sonde par rapport au spécimen est supérieure à une deuxième profondeur de pénétration de la lumière du faisceau pompe par rapport au spécimen,
l'appareil de test optique (10) comprenant en outre :

un circuit de traitement (14) qui acquiert des informations sur le spécimen sur la base d'un changement chronologique d'intensité du faisceau sonde reçu par le photodétecteur (13) après que l'onde élastique est excitée dans le spécimen,
dans lequel le spécimen présente une surface qui est présente sur le côté de l'unité de génération de faisceau pompe (11) et une surface opposée qui est présente sur le côté opposé de la surface,
dans lequel l'onde élastique se propage à l'intérieur du spécimen de la surface en direction de la surface opposée,
dans lequel le faisceau sonde reçu par le photodétecteur (13) est un faisceau transmis qui a été émis par l'unité de génération de faisceau sonde (12), a été diffracté par un défaut présenté par le spécimen et a traversé le spécimen et
dans lequel le circuit de traitement (14) calcule, en tant qu'informations sur le spécimen, une distance entre la surface et le défaut à partir d'une vitesse de propagation de l'onde élastique à l'intérieur du spécimen, et un intervalle de temps entre un premier changement de faisceau transmis, dans lequel une intensité du faisceau sonde change d'un état avant que l'onde élastique soit excitée vers un état dans lequel l'onde élastique a été excitée à la surface et un deuxième changement de faisceau transmis dans lequel l'intensité du faisceau sonde change d'un état dans lequel l'onde élastique se trouve entre la surface et le défaut, vers un état dans lequel l'onde élastique se trouve entre le défaut et la surface opposée.

3. Appareil de test optique (10) selon la revendication 1 ou 2, dans lequel le photodétecteur (13) est conçu pour recevoir le faisceau sonde à au moins deux angles différents par rapport au spécimen.

4. Appareil de test optique (10) selon la revendication 1 ou 2, dans lequel l'unité de génération de faisceau pompe (11) applique un faisceau laser à impulsions courtes en tant que faisceau pompe.

5. Appareil de test optique (10) selon la revendication 1 ou 2, dans lequel l'unité de génération de faisceau pompe (11) applique le faisceau pompe qui respecte la formule mathématique suivante :

$$\zeta 1 < d$$

dans laquelle la deuxième profondeur de pénétration de lumière est désignée par $\zeta 1$ et une épaisseur du spécimen est désignée par d.

6. Appareil de test optique (10) selon la revendication 1 ou 2, dans lequel l'unité de génération de faisceau sonde (12) applique le faisceau sonde qui présente une longueur d'onde supérieure à une longueur d'onde du faisceau pompe appliqué par l'unité de génération de faisceau pompe (11).

F I G. 1

F I G. 2

F I G. 3

F I G. 4

18

FIG. 5

FIG. 6

FIG. 7

FIG. 8

F I G. 9

F I G. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2004253751 A1

- US 2003032377 A1

**Non-patent literature cited in the description**

- **THOMSEN C et al.** Surface generation and detection of phonons by picosecond light pulses. *Physical Review B,* 19 March 1986, vol. 34, 4129-4138